# FASCICULE DE BREVET EUROPEEN

(11) **EP 4 139 167 B1**
(45) Date de publication et mention de la délivrance du brevet: **28.02.2024**
(21) Numéro de dépôt: 21719673.2
(22) Date de dépôt: 22.04.2021
(51) Int. Cl.: B60Q 1/14, G06T 9/00, H04L 12/40

(54) **PROCÉDÉ DE GESTION DE DONNÉES D'IMAGE ET SYSTÈME D'ECLAIRAGE DE VEHICULE**
VERFAHREN ZUR VERWALTUNG VON BILDDATEN UND FAHRZEUGBELEUCHTUNGSSYSTEM
METHOD FOR MANAGING IMAGE DATA, AND VEHICLE LIGHTING SYSTEM

(30) Priorité: 23.04.2020 FR 2004088
(43) Date de publication de la demande: 01.03.2023
(73) Titulaire: VALEO VISION, 93012 Bobigny Cedex (FR)
(72) Inventeur: ALMEHIO, Yasser, 93012 BOBIGNY - Cedex (FR); EL IDRISSI, Hafid, 93012 BOBIGNY - Cedex (FR); PRAT, Constantin, 93012 BOBIGNY - Cedex (FR)
(74) Mandataire: Valeo Visibility
(86) Numéro de dépôt international: PCT/EP2021/060607
(87) Numéro de publication internationale: WO 2021/214261

(56) Documents cités:
- CN-U- 206 884 861
- US-A1- 2020 084 854
- PRADEEP Y B: "CAN - FD and Ethernet Create Fast Reliable Automotive Data Buses for the Next Decade", INTERNET CITATION, 1 avril 2013 (2013-04-01), pages 36-43, XP002713064, Extrait de l'Internet: URL:http://www.atmel.com/ja/jp/Images/Arti cle_AC10_CAN-FD-and-Ethernet.pdf [extrait le 2013-09-17]
- Anonymous: "Video transfer through a CAN Bus - Other microcontrollers forum - Other microcontrollers - TI E2E support forums", , 1 juillet 2015 (2015-07-01), XP055756902, Extrait de l'Internet: URL:https://e2e.ti.com/support/microcontro llers/other/f/908/t/440869 [extrait le 2020-12-04]

## Description

Cette invention est liée au domaine des systèmes d'éclairage de véhicule, et plus particulièrement à la gestion des données d'image pour le contrôle de sources d'éclairage d'un véhicule.

CN 206 884 861 U (CHANGZHOU XINGYU AUTOMOTIVE LIGHTING SYSTEMS CO LTD) divulgue un procédé selon le préambule de la revendication 1.

Les systèmes d'éclairage actuels comprennent notamment des sources de lumière permettant dorénavant de projeter un faisceau lumineux haute définition. La projection souhaitée de lumière haute définition peut être obtenue par l'intermédiaire des sources de lumière et à partir d'images, ou de motifs d'image, que les sources reçoivent en vue de les afficher et ainsi projeter un faisceau lumineux donné. Ces images ou motifs d'image peuvent atteindre des résolutions très élevées maintenant, notamment en fonction de la résolution de la source de lumière utilisée. A titre d'exemple, la source de lumière peut avoir au moins 4 000 à 30 000 pixels, permettant ainsi de générer un faisceau lumineux à partir d'image de ce niveau de résolution.

Pour parvenir à générer de tels faisceau lumineux haute définition, plusieurs sources lumineuses peuvent être utilisées, voire combinées, ce qui nécessite de les contrôler et de synchroniser finement ces sources afin de fournir des fonctionnalités d'éclairage maîtrisées, variées et adaptatives.

Le véhicule embarque donc de plus en plus de sources lumineuses, qui utilisent des données d'image haute définition de plus en plus lourdes, ce qui implique une grande quantité de données qui doivent être gérées par une unité de contrôle du véhicule et communiquées via un moyen de transmission entre l'unité de contrôle et la ou les sources lumineuses. Pour ce faire par exemple, un bus de données de type protocole CAN est souvent utilisé pour transférer de telles données entre l'unité de contrôle et la source de lumière. Cependant, ces moyens de transmission de données ont pour inconvénient d'avoir une largeur de bande limitée, ne permettant pas par exemple de dépasser un débit de 2 à 5 Mbps généralement. De ce fait, des difficultés apparaissent pour transmettre sur ces réseaux limités la grande quantité de données nécessaire aux images haute définition susmentionnées. De surcroît, ces réseaux servent également à la communication d'autres données véhicule, ce qui implique que la bande passante disponible pour les données d'image haute définition peut encore varier à la baisse, par exemple en étant limité à une plage de 70 à 90% du débit maximal possible sur le réseau de transmission de données. A titre d'exemple, pour communiquer des données d'image haute définition pour la projection d'une fonction d'éclairage avec une résolution de 20 000 pixels, le débit nécessaire sur un réseau de transmission de type CAN-FD serait généralement de 10 à 12

Mbps. Or, un tel réseau CAN-FD est en réalité limité à 5 Mbps à ce jour (voire même à 2 Mbps dans la plupart des cas). Il existe donc un besoin d'optimiser les données transmises sur ces réseaux, et notamment de compresser les données communiquées afin de transmettre un flux de données d'image haute définition suffisant pour assurer la ou les fonctions d'éclairage associées, et ce tout en respectant les contraintes de débit et bande passante de ce même réseau.

Des méthodes de compression connues ont été envisagées pour palier à cette problématique. Toutefois, elles se sont toutes avérées insuffisamment efficaces par rapport à la spécificité des faisceaux de route, compromettant ainsi une réduction suffisante de la largeur de la bande passante requise par les constructeurs automobiles.

Pour y parvenir, il pourrait être prévu que plusieurs niveaux ou itérations de compression des données soient réalisés, jusqu'à réussir à respecter une largeur de bande souhaitée. Ceci étant, une telle démarche impacte très sensiblement la qualité d'affichage des fonctions d'éclairage projetées, puisque à chaque compression effectuée, la qualité d'affichage est impactée, elle est réduite.

Or, pour certaines fonctions d'éclairage, par exemple Feux de route évolutifs (connu aussi sous l'acronyme ADB pour "Adaptive Driving Beam" en langue anglaise) et marquage au sol (connu aussi sous l'acronyme RW pour "Road Writing" en langue anglaise), la qualité d'affichage ne peut être trop dégradée, sous peine de diminuer sensiblement le confort de l'utilisateur, rendre incertaines, voire inadaptées ou même illisibles des informations lumineuses projetées par le faisceau lumineux.

Une solution est donc recherchée à ces problématiques afin de palier aux inconvénients préalablement cités.

L'invention apporte une solution aux problèmes posés au moyen, selon un premier aspect de l'invention, d'un procédé de gestion de données d'image dans un système d'éclairage de véhicule, le système d'éclairage comprenant :
- au moins un module d'éclairage apte à projeter des fonctions d'éclairage à partir de données d'image compressées, et
- un bus multiplexé de type protocole CAN ou CAN-FD pour la transmission de données d'image compressées audit au moins un module d'éclairage, le procédé comprenant les étapes suivantes :
   - réception d'une instruction de déclenchement d'une première fonction d'éclairage du système d'éclairage de véhicule ;
   - réception d'une instruction de déclenchement d'une deuxième fonction d'éclairage du système d'éclairage de véhicule, pour la génération de la deuxième fonction d'éclairage en simultané de la première fonction d'éclairage ;
   - détermination, pour la génération en simultané desdites première et deuxième fonctions d'éclairage, d'un taux de compression requis pour transmettre les données d'image sur ledit bus multiplexé ;
   - comparaison du taux de compression déterminé avec une valeur de taux de compression prédéterminée ;

   dans lequel, lorsque le taux de compression déterminé est supérieur ou égal à ladite valeur prédéterminée, le procédé comprend les étapes suivantes :
      - compression des données d'image des première et deuxième fonctions ;
      - transmission des données d'image compressées audit au moins un module d'éclairage pour génération en simultané des première et deuxième fonctions d'éclairage ;
   et dans lequel, lorsque le taux de compression déterminé est inférieur à ladite valeur prédéterminée, le procédé comprend les étapes suivantes :
      - compression des données d'image de seulement une des première et deuxième fonctions d'éclairage ;
      - transmission des données d'image compressées audit au moins un module d'éclairage pour génération de seulement l'une des première et deuxième fonctions d'éclairage.

Ce procédé vise ainsi à empêcher, au moins temporairement, la compression d'une combinaison de fonctions d'éclairage lorsque le taux de compression déterminé ne permet pas de respecter un taux de compression prédéterminé. La valeur du taux de compression prédéterminé peut notamment être fonction du niveau de compression nécessaire pour que les données d'image des fonctions d'éclairage puissent être transmises de manière fluide via le bus multiplexé, dans la limite de ses capacités de transmission, à savoir son débit de transmission maximum notamment.

La combinaison de fonctions d'éclairage est ainsi rendue dynamique, l'interdiction temporaire de combinaison de plusieurs fonctions en simultané, permettant de limiter au moins temporairement le débit de transmission nécessaire sur le bus multiplexé pour transmettre les données d'image. Avec l'interdiction de combinaison de fonctions d'éclairage, il est alors possible de :
- diminuer le nombre de données d'image à communiquer via le bus multiplexé,
- conserver un niveau élevé de compression des données d'image tout en respectant la largeur de bande maximale autorisée,
- conserver une bonne qualité d'image, sans avoir par exemple à la dégrader par l'intermédiaire d'une nouvelle compression des données d'image déjà compressées, pour réussir à respecter le débit maximal du bus multiplexé,
- assurer la transmission de données d'image haute définition sur le bus multiplexé en ne pénalisant que temporairement l'affichage de la fonction d'éclairage interdite.

Selon un mode de réalisation avantageux, le procédé comprend en outre des étapes de :
- détermination d'un niveau d'erreur à partir dudit taux de compression déterminé,
- comparaison du niveau d'erreur avec une valeur de marge d'erreur prédéterminée ;
et dans lequel, les étapes de compression et transmission des données d'image pour génération en simultané des première et deuxième fonctions d'éclairage sont réalisées lorsque, en outre, le niveau d'erreur déterminé est inférieur ou égal à la valeur de marge d'erreur prédéterminée.

De cette manière, la combinaison de fonctions d'éclairage n'est effectuée que lorsque la compression des données d'image des fonctions d'éclairage à générer en simultané implique un niveau d'erreur raisonnable, c'est-à-dire inférieur ou égal à la valeur de marge d'erreur prédéterminée. Ces étapes du procédé permettent d'assurer une combinaison de fonctions pour laquelle une faible perte de données est garantie à la compression.

Selon un mode de réalisation avantageux, les étapes de compression et transmission des données d'image pour génération de seulement l'une des première et deuxième fonctions d'éclairage sont en outre réalisées lorsque le niveau d'erreur déterminé est supérieur à la valeur de marge d'erreur prédéterminée.

Ainsi, la combinaison de fonctions d'éclairage n'est pas réalisée lorsque la compression des données d'image des fonctions d'éclairage à générer en simultané implique un niveau d'erreur trop élevé. Ces étapes du procédé contribuent également à assurer une combinaison de fonctions pour laquelle une faible perte de données est garantie à la compression, et sinon, seulement une des fonctions d'éclairage est générée pour ne pas dégrader la qualité d'affichage des fonctions d'éclairage.

Selon un mode de réalisation avantageux, la première et la deuxième fonction d'éclairage sont chacunes associées à un niveau de criticité distinct et, auxdites étapes de compression et transmission des données d'image pour génération de seulement l'une des première et deuxième fonctions d'éclairage, les données d'image compressées et transmises sont celles de la fonction d'éclairage dont le niveau de criticité associé est supérieur à l'autre.

Le niveau de criticité associé à chacune des fonctions d'éclairage permet ainsi d'établir un ordre de priorité dans l'affichage des fonctions qui permettra notamment, lorsque la combinaison de fonctions lumineuses est interdite, de ne générer que la fonction d'éclairage la plus critique. A titre d'exemple non limitatif, la fonction Feux de route évolutifs ADB peut avoir un niveau de criticité plus élevé que la fonction de marquage au sol RW de telle sorte que, en cas d'interdiction de combinaison des fonctions ADB et RW, la fonction ADB est prioritaire en vue de ne pas éblouir les conducteurs des autres véhicules.

Selon un mode de réalisation avantageux, la première fonction d'éclairage est une fonction lumineuse feux de route évolutifs (connue aussi sous l'acronyme ADB pour "Adaptive Driving Beam" en langue anglaise).

Selon un mode de réalisation avantageux, la deuxième fonction d'éclairage est une fonction lumineuse de marquage au sol (connue aussi sous l'acronyme RW pour "Road Writing" en langue anglaise).

Selon un mode de réalisation avantageux, préalablement à la réception de l'instruction de déclenchement de la deuxième fonction d'éclairage du système d'éclairage de véhicule, le procédé comprend en outre des étapes de :
- compression des données d'image de la première fonction d'éclairage ; et
- transmission des données d'image compressées audit au moins un module d'éclairage pour génération de la première fonction d'éclairage.

Selon ce mode de réalisation, la première fonction d'éclairage est déjà en cours de fonctionnement, c'est-à-dire déjà générée par le système d'éclairage, lorsque l'instruction de déclenchement de la deuxième fonction d'éclairage est reçue.

Selon un mode de réalisation avantageux, préalablement à la réception de l'instruction de déclenchement de la première fonction d'éclairage du système d'éclairage de véhicule, le procédé comprend en outre des étapes de :
- compression de données d'image d'une troisième fonction d'éclairage ; et
- transmission des données d'image compressées audit au moins un module d'éclairage pour génération de la troisième fonction d'éclairage.

Selon cette réalisation, la troisième fonction d'éclairage peut déjà être en cours de fonctionnement, c'est-à-dire déjà générée par le système d'éclairage, avant que les instructions de déclenchement de la première ou de la deuxième fonction d'éclairage ne soit reçue.

Selon un mode de réalisation avantageux, la troisième fonction d'éclairage est une fonction lumineuse feux de route (connue aussi sous l'acronyme HB pour "High Beam" en langue anglaise).

Selon un deuxième aspect de l'invention, l'invention concerne également un système d'éclairage comprenant :
- au moins un module d'éclairage apte à projeter des fonctions d'éclairage à partir de données d'image compressées,
- un bus multiplexé pour la transmission de données d'image compressées audit au moins un module d'éclairage, et
- un système de commande configuré pour mettre en oeuvre le procédé de gestion de données d'image décrit précédemment.

Selon un autre mode réalisation avantageux, le système de commande comprend en outre :
- une première unité de commande munie d'une unité de processeur configurée pour :
   - compresser des données d'image de fonctions d'éclairage,
   - transmettre audit au moins un module d'éclairage, via ledit bus multiplexé, les données d'image compressées,
- une deuxième unité de commande munie d'une unité de processeur configurée pour :
   - recevoir des données d'image compressées transmises via ledit bus multiplexé,
   - décompresser les données d'image reçues,
   - générer l'au moins une fonction d'éclairage à partir des données d'image reçues et décompressées.

Selon un autre mode réalisation avantageux, l'au moins un module d'éclairage comprend au moins une source de lumière à semi-conducteurs, telles que des LED, et en particulier une source LED pixélisée.

Par rapport à l'éclairage à incandescence, l'éclairage à semi-conducteurs crée de la lumière visible avec une production de chaleur et une dissipation d'énergie réduites. La masse généralement faible d'un dispositif d'éclairage électronique à semi-conducteurs offre une plus grande résistance aux chocs et aux vibrations que les tubes/ampoules en verre cassant et les fils de filaments longs et fins. Ils éliminent également l'évaporation du filament, ce qui peut augmenter la durée de vie du dispositif d'éclairage. Certains exemples de ces types d'éclairage comprennent les diodes électroluminescentes (DEL ou LED pour "Light-Emitting Diode" en langue anglaise) à semi-conducteurs, les diodes électroluminescentes organiques (DELO) ou les diodes électroluminescentes à polymère (DELP) comme sources d'éclairage plutôt que les filaments électriques, le plasma ou le gaz. Les fonctions d'éclairage haute définition peuvent être assurées par projection d'un ou plusieurs faisceaux lumineux projetés par une source LED ou un ensemble de LEDs, voire par une source LED pixélisée.

Sauf définition contraire, tous les termes (y compris les termes techniques et scientifiques) utilisés dans le présent document doivent être interprétés conformément aux usages de la profession. Il sera en outre entendu que les termes d'usage courant doivent également être interprétés comme étant d'usage dans l'art concerné et non dans un sens idéalisé ou trop formel, sauf si cela est expressément défini dans le présent document.

Dans ce texte, le terme "comprend" et ses dérivés (tels que "comprenant", etc.) ne doivent pas être compris dans un sens excluant, c'est-à-dire que ces termes ne doivent pas être interprétés comme excluant la possibilité que ce qui est décrit et défini puisse inclure d'autres éléments, étapes, etc.

Pour compléter la description et pour permettre une meilleure compréhension de l'invention, un ensemble de dessins est fourni. Ces dessins font partie intégrante de la description et illustrent un mode de réalisation de l'invention, qui ne doit pas être interprété comme limitant la portée de l'invention, mais simplement comme un exemple de la manière dont l'invention peut être réalisée. Les dessins comprennent les figures suivantes :
Fig.1 montrant un premier mode de réalisation du système d'éclairage selon l'invention.
Fig.2 montrant un deuxième mode de réalisation de ce système d'éclairage.
Fig.3 montrant un troisième mode de réalisation de ce système d'éclairage.
Fig.4 montrant une première représentation d'étapes du procédé de gestion de données d'image selon l'invention.
Fig.5 montrant une deuxième représentation d'étapes du procédé de gestion de données d'image, comprenant des étapes supplémentaires à la première représentation de la Fig.4.
Fig.6 montrant une troisième représentation d'étapes du procédé de gestion de données d'image, comprenant d'autres étapes supplémentaires à la première représentation de la Fig.4.
Fig.7 montrant le résultat sur le taux de compression obtenu lorsque le procédé conforme à l'invention est utilisé.
Fig.8 montrant un dispositif d'éclairage de véhicule qui comprend au moins une partie du système d'éclairage selon l'invention.

Sur ces figures, les références suivantes ont été utilisées :
LB Fonction d'éclairage de feux de croisement
HB Fonction d'éclairage de feux de route
ADB Fonction d'éclairage de feux de route adaptatifs/évolutifs
RW Fonction d'éclairage de marquage au sol
SYS Système d'éclairage
SC Système de commande
PCM Module de pilotage des fonctions d'éclairage
CAN Bus de transmission de données multiplexé
MOD Module d'éclairage
PLED, PLED1, PLED2, PLED3, PLED4 Source de lumière à semi-conducteurs
UC1 Première unité de commande
UC2 Deuxième unité de commande
PROC1 Première unité de processeur
PROC2 Deuxième unité de processeur
MOD1 Premier module d'éclairage
MOD2 Deuxième module d'éclairage
I1 Étape de réception d'une première instruction
I2 Étape de réception d'une deuxième instruction
DET Étape de détermination
COMP, COMP2 Étape de comparaison
COMPR Étape de compression de données d'image
TRANS, TRANS0, TRANS1, TRANS2 Étape de transmission de données d'image
COMPR1 Premier taux de compression
COMPR2 Deuxième taux de compression
DIS Dispositif d'éclairage de véhicule de véhicule
OPT Optique d'éclairage

Les exemples de réalisations sont décrits de manière suffisamment détaillée pour permettre à ceux qui ont des compétences ordinaires dans cette technique de réaliser et de mettre en oeuvre les systèmes et les procédés décrits ici. Il est important de comprendre que les modes de réalisation peuvent être effectués sous de nombreuses formes alternatives et ne doivent pas être interprétés comme étant limités aux exemples présentés ici.

En conséquence, bien que les modes de réalisation puissent être modifiés de diverses manières et prendre diverses formes alternatives, des réalisations spécifiques de celle-ci sont montrées dans les dessins et décrites en détail ci-dessous à titre d'exemple. Il n'y a aucune intention de se limiter aux exemples particuliers divulgués. Au contraire, toutes les modifications, équivalents et alternatives entrant dans le champ d'application des revendications annexées doivent être inclus.

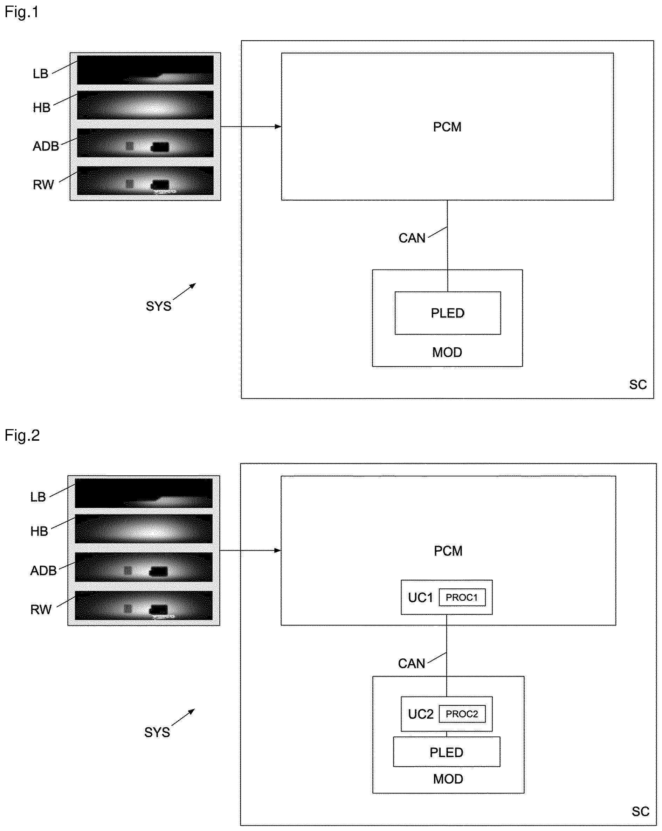

On se réfère tout d'abord à la Fig.1 qui montre un premier mode de réalisation du système d'éclairage SYS selon l'invention. Le système d'éclairage SYS comprend notamment :
- au moins un module d'éclairage MOD apte à projeter des fonctions d'éclairage à partir de données d'image compressées,
- un bus multiplexé CAN (ou CAN-FD) pour la transmission de données d'image compressées au module d'éclairage MOD, et
- un système de commande SC configuré pour mettre en oeuvre le procédé de gestion de données d'image proposé, en vue de générer des fonctions d'éclairage données.

A cet effet, le système de commande SC peut recevoir des instructions d'une unité de commande du véhicule (non représentée sur les figures), pour générer chacune des fonctions d'éclairage indépendamment les unes des autres, ou au contraire, en combinaison. Par exemple, les fonctions d'éclairage peuvent être combinées entre elles deux à deux. Selon un autre exemple, trois ou quatre fonctions d'éclairage peuvent être combinées entre elles, voire même l'ensemble des fonctions d'éclairage possibles.

L'unité de commande du véhicule peut générer les instructions de génération de fonctions d'éclairage à partir d'une commande d'éclairage effectuée par le conducteur, ou d'une commande d'éclairage déterminée par une unité de détection, telle qu'une caméra ou un détecteur de luminosité.

Les instructions reçues par le système de commande SC peuvent notamment être des instructions pour générer un faisceau lumineux correspondant aux fonctions d'éclairage suivantes :
- Feux de croisement LB (connu aussi sous l'acronyme LB pour "Low Beam" en langue anglaise),
- Feux de route HB (connu aussi sous l'acronyme HB pour "High Beam" en langue anglaise),
- Feux de route évolutifs ADB (connu aussi sous l'acronyme ADB pour "Adaptive Driving Beam" en langue anglaise), ou
- marquage au sol RW (connu aussi sous l'acronyme RW pour "Road Writing" en langue anglaise).

Il est entendu par Feux de route évolutifs ADB toutes fonctions d'éclairage permettant de faire varier dynamiquement le faisceau d'éclairage pour l'adapter à des situations de circulation du véhicule. Par exemple, cela peut concerner une fonction selon laquelle l'éclairage est projeté avec une photométrie de type feu de route tout en évitant l'éblouissement des autres usagers de la route. En variante ou en complément, la fonction peut concerner :
- une photométrie permettant un éclairage dynamique directionnel, autrement dit un déplacement horizontal de l'intensité maximale d'une photométrie LB ou HB en fonction de l'angle de rotation du volant d'un véhicule automobile (aussi connue sous l'acronyme DBL, pour "Dynamic Bending Light" langue anglaise) ;
- un éclairage permettant d'éviter l'éblouissement des panneaux d'affichage d'une route suite à la projection de faisceaux lumineux provenant du véhicule automobile (aussi connue sous l'acronyme TSAG pour "Traffic Sign Anti-Glare" en langue anglaise) ;
- un éclairage permettant la projection de de motif de type lignes sur la route, notamment pour délimiter une portion de route à emprunter par le véhicule automobile ou présenter une stratégie d'évitement d'obstacle (aussi connue sous l'acronyme LA pour "Line Assist" en langue anglaise).

Il est entendu par marquage au sol RW toutes fonctions d'éclairage permettant la projection sur la route de motifs visibles par le conducteur et/ou par les usagers de la route, notamment d'aides à la conduites, de sigles de signalisation ou autre indicateurs de navigation par exemple.

Le système de commande SC peut comprendre en outre un module de pilotage PCM de sources lumineuses du véhicule, apte à recevoir les instructions de génération de fonctions d'éclairage et à contrôler les sources lumineuses du véhicule de sorte à générer le faisceau lumineux attendu pour la fonction d'éclairage demandée. Pour ce faire, le module de pilotage PCM peut notamment être en interface avec le bus multiplexé CAN pour transmettre les données d'image nécessaires au module d'éclairage MOD afin de projeter les fonctions d'éclairage souhaitées.

Le bus multiplexé peut être choisi parmi n'importe quel bus de transmission de données connu dans le domaine des véhicules, et en particulier un bus de données de type protocole CAN ou CAN-FD.

Pour générer des faisceaux lumineux associés à des fonctions d'éclairage à déclencher, le module d'éclairage MOD comprend au moins une source de lumière, et en particulier une source de lumière à semi-conducteurs PLED, telles que des LED, et en particulier une source LED pixélisée.

De cette manière, le système d'éclairage SYS est apte à faire projeter des faisceaux lumineux par la source de lumière PLED à partir de données d'image compressées reçues via le bus multiplexé CAN. En outre, le système d'éclairage SYS vise à compresser les données d'image par l'intermédiaire du système de commande SC, par exemple au niveau du module de pilotage PCM, selon les fonctions d'éclairage souhaitées et de la mise en oeuvre du procédé de gestion de données d'image proposé.

On se réfère maintenant à la Fig.2 qui montre un deuxième mode de réalisation du système d'éclairage SYS, dans lequel le système de commande SC comprend en outre :
- une première unité de commande UC1 (par exemple intégrée au module de pilotage PCM) munie d'une unité de processeur PROC1 configurée pour :
   - compresser des données d'image de fonctions d'éclairage HB,ADB,RW,
   - transmettre au module d'éclairage MOD, via le bus multiplexé CAN, les données d'image compressées,
- une deuxième unité de commande UC2 (par exemple intégrée au module d'éclairage MOD) munie d'une unité de processeur PROC2 configurée pour :
   - recevoir des données d'image compressées transmises via ledit bus multiplexé CAN,
   - décompresser les données d'image reçues,
   - générer l'au moins une fonction d'éclairage HB,ADB,RW à partir des données d'image reçues et décompressées.

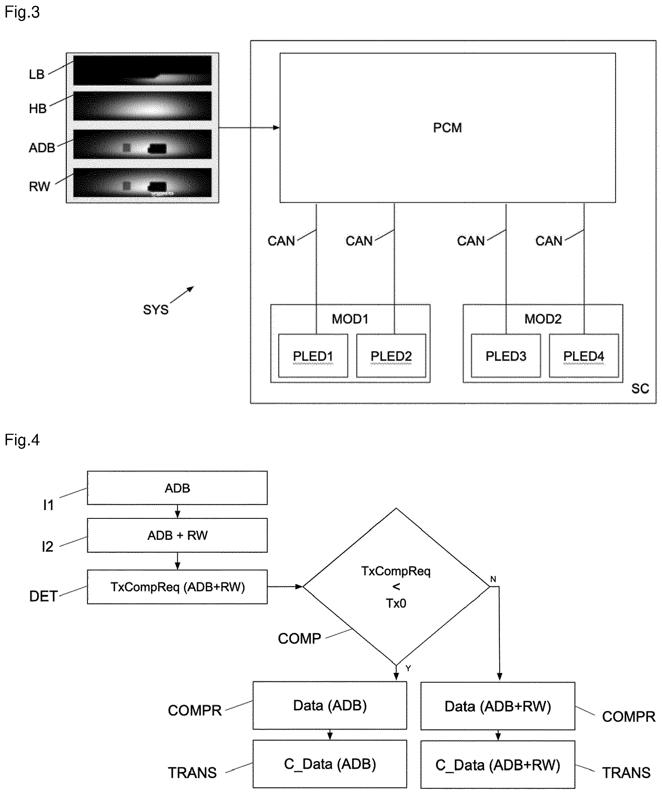

On se réfère maintenant à la Fig.3 qui montre un troisième mode de réalisation du système d'éclairage SYS dans lequel le système de commande SC comporte un premier module MOD1 et un deuxième module MOD2 d'éclairage, qui peuvent être configurés pour être :
- intégrés chacun dans un projecteur différent du véhicule, par exemple le premier module MOD1 dans le projecteur droit du véhicule et le deuxième module MOD2 dans le projecteur gauche du véhicule ;
- intégrés dans un même projecteur de véhicule.

En outre, chaque module MOD1 et MOD2 peut comprendre une pluralité de sources lumineuses PLED1, PLED2, PLED3, PLED4 pour permettre de générer les faisceaux lumineux des fonctions d'éclairage souhaitées LB, HB, ADB, RW. Les sources lumineuses PLED1, PLED2, PLED3, PLED4 peuvent en particulier être des sources de lumière à semi-conducteurs PLED, telles que des LED, et en particulier des sources LED pixélisées, par exemple ayant une résolution de 2 500, 4 000 ou 20 000 pixels.

Pour la compression des données d'image, le taux de compression souhaité est de préférence supérieur ou égal à 75%, voire de préférence encore supérieur ou égal à 85%. En effet, une compression d'au moins 75% est un taux de compression qui permet de faire passer des données d'image d'une fonction d'éclairage haute définition, ou d'une combinaison de fonctions d'éclairage haute définition, sur des bus de transmission de véhicule de véhicule à bande passante limitée, tel que le bus multiplexé CAN.

On se réfère maintenant à la Fig.4 qui montre une représentation des étapes du procédé de gestion de données d'image selon l'invention. Le procédé comprend les étapes suivantes :
- réception (étape 11) d'une instruction de déclenchement d'une première fonction d'éclairage (par exemple la fonction feux de route évolutifs ADB) du système d'éclairage de véhicule SYS ;
- réception (étape I2) d'une instruction de déclenchement d'une deuxième fonction d'éclairage (par exemple la fonction marquage au sol RW) du système d'éclairage de véhicule SYS, pour la génération de la deuxième fonction d'éclairage en simultané de la première fonction d'éclairage (ADB+RW) ;
- détermination (étape DET), pour la génération en simultané des première et deuxième fonctions d'éclairage, d'un taux de compression requis TxCompReq pour transmettre les données d'image sur ledit bus multiplexé CAN ;
- comparaison (étape COMP) du taux de compression TxCompReq déterminé avec une valeur de taux de compression prédéterminée Tx0.

Lorsque le taux de compression TxCompReq déterminé est supérieur ou égal à la valeur prédéterminée Tx0 (sortie N de l'étape COMP), le procédé comprend les étapes suivantes :
- compression (étape COMPR) des données d'image des première et deuxième fonctions (ADB+RW) ;
- transmission (étape TRANS) des données d'image compressées C_Data au module d'éclairage MOD pour génération en simultané des première et deuxième fonctions d'éclairage (ADB+RW dans cet exemple).

En revanche, lorsque le taux de compression TxCompReq déterminé est inférieur à ladite valeur prédéterminée Tx0 (sortie Y de l'étape COMP), le procédé comprend les étapes suivantes :
- compression (étape COMPR) des données d'image de seulement une des première et deuxième fonctions d'éclairage (à titre illustratif, de la fonction ADB uniquement dans cet exemple) ;
- transmission (étape TRANS) des données d'image compressées C_Data au module d'éclairage MOD pour génération de seulement l'une des première et deuxième fonctions d'éclairage (uniquement ADB dans cet exemple).

Le procédé permet ainsi d'empêcher, au moins temporairement, la compression d'une combinaison de fonctions d'éclairage lorsque le taux de compression déterminé ne permet pas de respecter un taux de compression prédéterminé. La valeur du taux de compression prédéterminé Tx0 peut notamment être fonction du niveau de compression nécessaire pour que les données d'image des fonctions d'éclairage puissent être transmises de manière fluide via le bus multiplexé CAN, dans la limite de ses capacités de transmission, à savoir son débit de transmission maximum.

Le taux de compression prédéterminé Tx0 peut être égal à une valeur proportionnelle à la bande passante du bus multiplexé. Selon un exemple possible, le taux de compression prédéterminé Tx0 est de 75%. En effet, une compression d'au moins 75% est un taux de compression qui permet de faire passer des données d'image d'une fonction d'éclairage haute définition, ou d'une combinaison de fonctions d'éclairage haute définition, sur des bus de transmission de véhicule de véhicule à bande passante limitée, tel que le bus multiplexé CAN. Selon un mode de réalisation préféré, le taux de compression prédéterminé Tx0 est encore supérieur, et notamment de 85%.

Selon un mode de réalisation possible, la première et la deuxième fonction d'éclairage peuvent chacunes être associées à un niveau de criticité distinct. Le cas échéant, aux étapes de compression et transmission des données d'image (étapes COMPR et TRANS) pour génération de seulement l'une des première et deuxième fonctions d'éclairage, les données d'image compressées et transmises sont celles de la fonction d'éclairage dont le niveau de criticité associé est supérieur. A titre d'exemple, le niveau de criticité de la fonction ADB peut être supérieur au niveau de criticité de la fonction marquage au sol, et de ce fait, ce sera la fonction ADB dont les données d'image seront compressées et transmises en vue de ne générer que la fonction ADB par le module d'éclairage MOD.

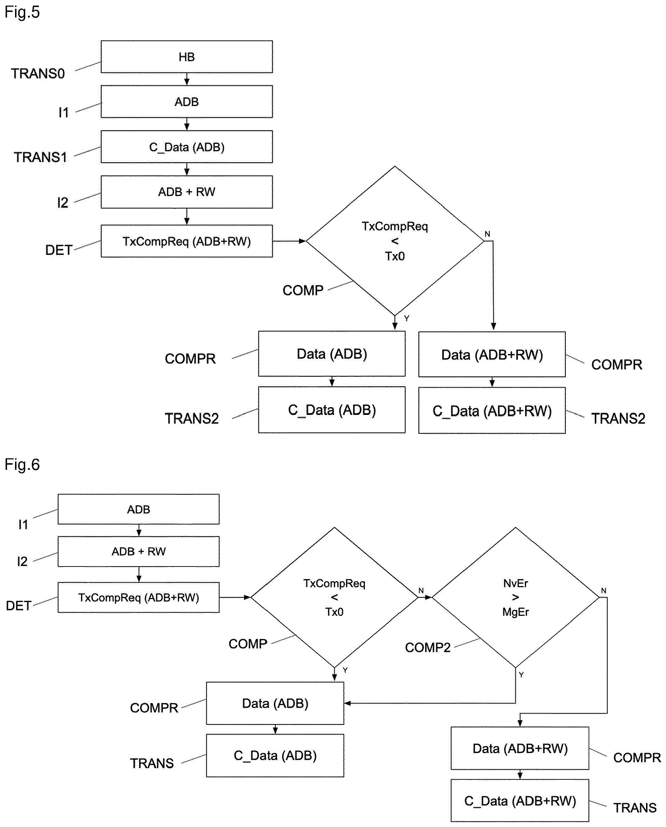

On se réfère maintenant à la Fig.5 qui montre une deuxième représentation d'étapes du procédé de gestion de données d'image, comprenant des étapes supplémentaires à la première représentation de la Fig.4.

En l'occurrence, dans ce mode de réalisation, préalablement à la réception (étape 11) de l'instruction de déclenchement de la première fonction d'éclairage du système d'éclairage de véhicule SYS, le procédé comprend en outre des étapes de :
- compression de données d'image d'une troisième fonction d'éclairage (ici par exemple la fonction Feux de route HB) ; et
- transmission (étape TRANS0) des données d'image compressées au module d'éclairage MOD pour génération de la troisième fonction d'éclairage.

Selon cette réalisation, la troisième fonction d'éclairage peut déjà être en cours de fonctionnement, c'est-à-dire déjà générée par le système d'éclairage SYS, avant que les instructions de déclenchement de la première ou de la deuxième fonction d'éclairage ne soit reçue.

Alternativement ou en complément, préalablement à la réception (étape I2) de l'instruction de déclenchement de la deuxième fonction d'éclairage du système d'éclairage de véhicule SYS, le procédé peut comprendre en outre des étapes de :
- compression des données d'image de la première fonction d'éclairage (la fonction ADB par exemple) ; et
- transmission TRANS des données d'image compressées C_Data au module d'éclairage MOD pour génération de la première fonction d'éclairage (ADB dans cet exemple).

Selon ce mode de réalisation, la première fonction d'éclairage est déjà en cours de fonctionnement, c'est-à-dire déjà générée par le système d'éclairage SYS, lorsque l'instruction de déclenchement de la deuxième fonction d'éclairage est reçue (étape I2).

On se réfère maintenant à la Fig.6 qui montre une troisième représentation d'étapes du procédé de gestion de données d'image, comprenant d'autres étapes supplémentaires à la première représentation de la Fig.4. Dans ce mode de réalisation, le procédé comprend en outre des étapes de :
- détermination (étape non illustrée) d'un niveau d'erreur NvEr à partir du taux de compression TxCompReq déterminé,
- comparaison (étape COMP2) du niveau d'erreur NvEr avec une valeur de marge d'erreur prédéterminée MgEr.

Le procédé prévoit également que les étapes de compression (étape COMPR) et transmission (étape TRANS) des données d'image pour génération en simultané des première et deuxième fonctions d'éclairage (ADB+RW dans cet exemple) sont réalisées lorsque, en outre, le niveau d'erreur (NvEr) déterminé est inférieur ou égal à la valeur de marge d'erreur prédéterminée MgEr (sortie N de l'étape COMP2).

De cette manière, la combinaison de fonctions d'éclairage n'est effectuée que lorsque la compression des données d'image des fonctions d'éclairage à générer en simultané implique un niveau d'erreur raisonnable, c'est-à-dire inférieur ou égal à la valeur de marge d'erreur prédéterminée. Ces étapes du procédé permettent d'assurer une combinaison de fonctions pour laquelle une faible perte de données est garantie à la compression.

En revanche, les étapes de compression et transmission des données d'image pour génération de seulement l'une des première et deuxième fonctions (ADB uniquement par exemple) d'éclairage sont réalisées lorsque le niveau d'erreur NvEr déterminé est supérieur à la valeur de marge d'erreur prédéterminée MgEr.

Ainsi, la combinaison de fonctions d'éclairage n'est pas réalisée lorsque la compression des données d'image des fonctions d'éclairage à générer en simultané implique un niveau d'erreur trop élevé. Ces étapes du procédé contribuent également à assurer une combinaison de fonctions pour laquelle une faible perte de données est garantie à la compression, et si non, seulement une des fonctions d'éclairage est générée pour ne pas dégrader la qualité d'affichage des fonctions d'éclairage.

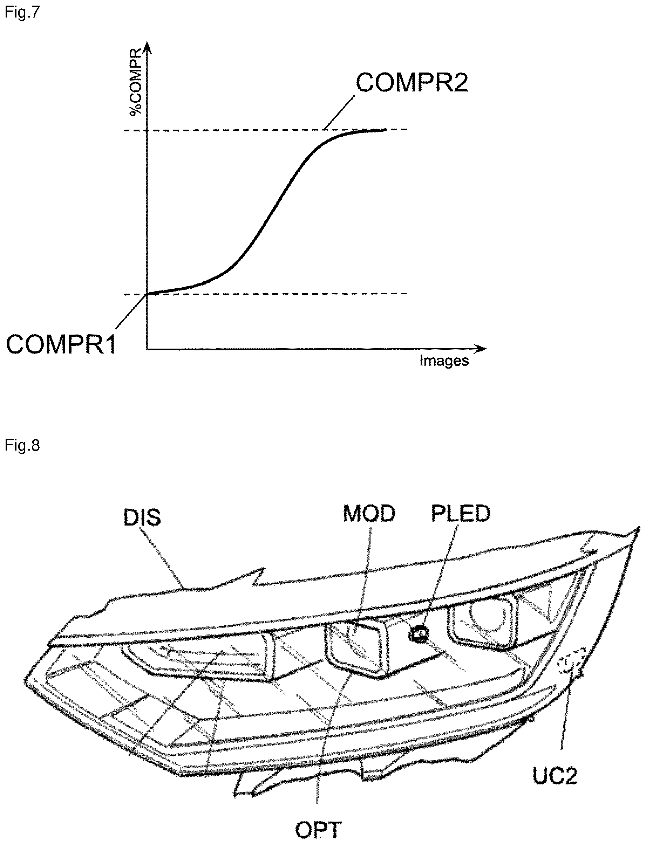

On se réfère maintenant à la Fig.7 qui montre le résultat sur le taux de compression obtenu lorsque le procédé conforme à l'invention est utilisé. En interdisant la combinaison de fonctions d'éclairage au moins temporairement, le nombre de données d'image à compresser est réduit. De ce fait, le taux de compression COMPR1 requis pour la compression de la combinaison de fonctions d'éclairage peut être amélioré, et passer d'une valeur initiale COMPR1 à une valeur de taux de compression améliorée COMPR2, ayant une valeur plus élevée que COMPR1.

Avec le procédé, la combinaison de fonctions d'éclairage est ainsi rendue dynamique, l'interdiction temporaire de compression de données d'image de plusieurs fonctions en simultané, permettant de limiter au moins temporairement le débit de transmission nécessaire sur le bus multiplexé pour transmettre les données d'image. Avec l'interdiction de combinaison de fonctions d'éclairage, il est alors possible de :
- diminuer le nombre de données d'image à communiquer via le bus multiplexé,
- conserver, voire améliorer, le niveau élevé de compression des données d'image tout en respectant la largeur de bande maximale autorisée,
- conserver une bonne qualité d'image, sans avoir par exemple à la dégrader par l'intermédiaire d'une nouvelle compression des données d'image déjà compressées, pour réussir à respecter le débit maximal du bus multiplexé,
- assurer la transmission de données d'image haute définition sur le bus multiplexé en ne pénalisant que temporairement l'affichage de la fonction d'éclairage interdite.

On se réfère à la Fig.8 qui montre un dispositif d'éclairage DIS de véhicule de type projecteur avant, ce dispositif d'éclairage DIS comprenant :
- le module d'éclairage MOD ayant au moins une source de lumière PLED ;
- une optique OPT associée à la source de lumière PLED pour générer des faisceaux lumineux de fonctions d'éclairage souhaitées ;
- l'unité de commande UC2 pour effectuer les étapes de réception et décompression des données d'image.

L'étape de décompression des données d'image compressées reçues peut être effectuée selon toute méthode de décompression approriée pour la génération d'une fonction d'éclairage.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes.

Par exemple, l'invention pourrait s'appliquer également pour un système d'éclairage comprenant au moins un feu arrière de véhicule et/ou un feux de signalisation de véhicule et/ou un module d'éclairage intérieur de véhicule, en vue de faire générer les fonctions d'éclairage qui leur sont associées tout en bénéficiant des avantages proposés et obtenus par l'invention, par la technique de compression de données d'image selon une interdiction dynamique et temporaire de combinaison de fonctions d'éclairage.

## Revendications

1. Procédé de gestion de données d'image dans un système d'éclairage de véhicule (SYS), le système d'éclairage comprenant :
- au moins un module d'éclairage (MOD) apte à projeter des fonctions d'éclairage à partir de données d'image compressées, et
- un bus multiplexé de type protocole CAN ou CAN-FD (CAN) pour la transmission de données d'image compressées audit au moins un module d'éclairage (MOD),
le procédé comprenant les étapes suivantes :
- réception d'une instruction de déclenchement d'une première fonction d'éclairage (ADB) du système d'éclairage de véhicule (SYS) ;
**caractérisé en ce que** le procédé comprend les étapes suivantes:
- réception d'une instruction de déclenchement d'une deuxième fonction d'éclairage (RW) du système d'éclairage de véhicule (SYS), pour la génération de la deuxième fonction d'éclairage (RW) en simultané de la première fonction d'éclairage (ADB) ;
- détermination, pour la génération en simultané desdites première (ADB) et deuxième (RW) fonctions d'éclairage, d'un taux de compression requis (TxCompReq) pour transmettre les données d'image sur ledit bus multiplexé (CAN) ;
- comparaison du taux de compression (TxCompReq) déterminé avec une valeur de taux de compression prédéterminée (Tx0) ;
dans lequel, lorsque le taux de compression (TxCompReq) déterminé est supérieur ou égal à ladite valeur prédéterminée (Tx0), le procédé comprend les étapes suivantes :
- compression des données d'image des première (ADB) et deuxième (RW) fonctions ;
- transmission des données d'image compressées audit au moins un module d'éclairage (MOD) pour génération en simultané des première (ADB) et deuxième (RW) fonctions d'éclairage ;
et dans lequel, lorsque le taux de compression (TxCompReq) déterminé est inférieur à ladite valeur prédéterminée (Tx0), le procédé comprend les étapes suivantes :
- compression des données d'image de seulement une des première (ADB) et deuxième (RW) fonctions d'éclairage ;
- transmission des données d'image compressées audit au moins un module d'éclairage (MOD) pour génération de seulement l'une des première (ADB) et deuxième (RW) fonctions d'éclairage.

2. Procédé selon la revendication précédente, comprenant en outre des étapes de :
- détermination d'un niveau d'erreur (NvEr) à partir dudit taux de compression (TxCompReq) déterminé,
- comparaison du niveau d'erreur (NvEr) avec une valeur de marge d'erreur prédéterminée (MgEr) ;
et dans lequel, les étapes de compression et transmission des données d'image pour génération en simultané des première (ADB) et deuxième (RW) fonctions d'éclairage sont réalisées lorsque, en outre, le niveau d'erreur (NvEr) déterminé est inférieur ou égal à la valeur de marge d'erreur prédéterminée (MgEr).

3. Procédé selon la revendication précédente, dans lequel les étapes de compression et transmission des données d'image pour génération de seulement l'une des première (ADB) et deuxième (RW) fonctions d'éclairage sont en outre réalisées lorsque le niveau d'erreur (NvEr) déterminé est supérieur à la valeur de marge d'erreur prédéterminée (MgEr).

4. Procédé selon l'une des revendications précédentes, dans lequel la première (ADB) et la deuxième (RW) fonction d'éclairage sont chacunes associées à un niveau de criticité distinct (NvCr),
et dans lequel, auxdites étapes de compression et transmission des données d'image pour génération de seulement l'une des première (ADB) et deuxième (RW) fonctions d'éclairage, les données d'image compressées et transmises sont celles de la fonction d'éclairage dont le niveau de criticité (NvCr) associé est supérieur.

5. Procédé selon l'une des revendications précédentes, dans lequel la première fonction d'éclairage est une fonction lumineuse feux de route évolutifs (ADB).

6. Procédé selon l'une des revendications précédentes, dans lequel la deuxième fonction d'éclairage est une fonction lumineuse de marquage au sol (RW).

7. Procédé selon l'une des revendications précédentes, dans lequel préalablement à la réception de l'instruction de déclenchement de la deuxième fonction d'éclairage (RW) du système d'éclairage de véhicule (SYS),
le procédé comprend en outre des étapes de :
- compression des données d'image de la première fonction d'éclairage (ADB) ; et
- transmission des données d'image compressées audit au moins un module d'éclairage (MOD) pour génération de la première fonction d'éclairage (ADB).

8. Procédé selon l'une des revendications précédentes, dans lequel préalablement à la réception de l'instruction de déclenchement de la première fonction d'éclairage (ADB) du système d'éclairage de véhicule (SYS),
le procédé comprend en outre des étapes de :
- compression de données d'image d'une troisième fonction d'éclairage (HB) ; et
- transmission des données d'image compressées audit au moins un module d'éclairage (MOD) pour génération de la troisième fonction d'éclairage (HB).

9. Procédé selon la revendications précédente, dans lequel la troisième fonction d'éclairage est une fonction lumineuse feux de route (HB).

10. Système d'éclairage de véhicule (SYS) comprenant :
- au moins un module d'éclairage (MOD) apte à projeter des fonctions d'éclairage à partir de données d'image compressées, et
- un bus multiplexé (CAN) pour la transmission de données d'image compressées audit au moins un module d'éclairage (MOD), et
- une système de commande (SC) configurée pour mettre en oeuvre le procédé de gestion de données d'image selon l'une quelconque des revendications précédentes.

11. Système d'éclairage de véhicule (SYS) selon la revendication précédente, dans lequel le système de commande (SC) comprend :
- une première unité de commande (UC1) munie d'une unité de processeur (PROC1) configurée pour :
• compresser des données d'image de fonctions d'éclairage,
• transmettre audit au moins un module d'éclairage (MOD), via ledit bus multiplexé (CAN), les données d'image compressées,
- une deuxième unité de commande (UC2) munie d'une unité de processeur (PROC2) configurée pour :
• recevoir des données d'image compressées transmises via ledit bus multiplexé (CAN),
• décompresser les données d'image reçues,
• générer au moins une fonction d'éclairage (HB,ADB,RW) à partir des données d'image reçues et décompressées .

12. Système d'éclairage de véhicule (SYS) selon l'une des revendications 10 ou 11, dans lequel l'au moins un module d'éclairage (MOD) comprend au moins une source de lumière à semi-conducteurs (PLED), telles que des LED, et en particulier une source LED pixélisée.

## Patentansprüche

1. Verfahren zur Verwaltung von Bilddaten in einem Fahrzeugbeleuchtungssystem (SYS), wobei das Beleuchtungssystem Folgendes beinhaltet:
- mindestens ein Beleuchtungsmodul (MOD), das dazu fähig ist, Beleuchtungsfunktionen anhand von komprimierten Bilddaten zu projizieren, und
- einen gemultiplexten Bus vom Typ CAN- oder CAN-FD-Protokoll (CAN) für die Übertragung von komprimierten Bilddaten an das mindestens eine Beleuchtungsmodul (MOD), wobei das Verfahren die folgenden Schritte beinhaltet:
- Empfangen einer Anweisung zum Aktivieren einer ersten Beleuchtungsfunktion (ADB) des Fahrzeugbeleuchtungssystems (SYS);
**dadurch gekennzeichnet, dass** das Verfahren die folgenden Schritte beinhaltet:
- Empfangen einer Anweisung zum Aktivieren einer zweiten Beleuchtungsfunktion (RW) des Fahrzeugbeleuchtungssystems (SYS) zur Erzeugung der zweiten Beleuchtungsfunktion (RW) zeitgleich mit der ersten Beleuchtungsfunktion (ADB);
- Bestimmen, für die zeitgleiche Erzeugung der ersten (ADB) und der zweiten (RW) Beleuchtungsfunktion, einer erforderlichen Komprimierungsrate (TxCompReq), um die Bilddaten über den gemultiplexten Bus (CAN) zu übertragen;
- Vergleichen der bestimmten Komprimierungsrate (TxCompReq) mit einem vorbestimmten Komprimierungsratenwert (Tx0);
wobei, wenn die bestimmte Komprimierungsrate (TxCompReq) größer als oder gleich dem vorbestimmten Wert (Tx0) ist, das Verfahren die folgenden Schritte beinhaltet:
- Komprimieren der Bilddaten der ersten (ADB) und der zweiten (RW) Beleuchtungsfunktion;
- Übertragen der komprimierten Bilddaten an das mindestens eine Beleuchtungsmodul (MOD) zur zeitgleichen Erzeugung der ersten (ADB) und der zweiten (RW) Beleuchtungsfunktion;
und wobei, wenn die bestimmte Komprimierungsrate (TxCompReq) kleiner als der vorbestimmte Wert (Tx0) ist, das Verfahren die folgenden Schritte beinhaltet:
- Komprimieren der Bilddaten von nur einer von der ersten (ADB) und der zweiten (RW) Beleuchtungsfunktion;
- Übertragen der komprimierten Bilddaten an das mindestens eine Beleuchtungsmodul (MOD) zur Erzeugung von nur einer von der ersten (ADB) und der zweiten (RW) Beleuchtungsfunktion.

2. Verfahren nach dem vorhergehenden Anspruch, das ferner folgende Schritte beinhaltet:
- Bestimmen einer Fehlerstufe (NvEr) anhand der bestimmten Komprimierungsrate (TxCompReq),
- Vergleichen der Fehlerstufe (NvEr) mit einem vorbestimmten Wert eines Fehlerspielraums (MgEr);
und wobei die Schritte des Komprimierens und Übertragens der Bilddaten zur zeitgleichen Erzeugung der ersten (ADB) und der zweiten (RW) Beleuchtungsfunktion durchgeführt werden, wenn ferner die bestimmte Fehlerstufe (NvEr) kleiner als oder gleich dem vorbestimmten Wert eines Fehlerspielraums (MgEr) ist.

3. Verfahren nach dem vorhergehenden Anspruch, wobei die Schritte des Komprimierens und Übertragens der Bilddaten zur Erzeugung von nur einer von der ersten (ADB) und der zweiten (RW) Beleuchtungsfunktion ferner durchgeführt werden, wenn die bestimmte Fehlerstufe (NvEr) größer als der vorbestimmte Wert eines Fehlerspielraums (MgEr) ist.

4. Verfahren nach einem der vorhergehenden Ansprüche, wobei die erste (ADB) und die zweite (RW) Beleuchtungsfunktion jeweils mit einer unterschiedlichen Kritikalitätsstufe (NvCr) assoziiert sind und wobei bei den Schritten des Komprimierens und Übertragens der Bilddaten zur Erzeugung von nur einer von der ersten (ADB) und der zweiten (RW) Beleuchtungsfunktion die komprimierten und übertragenen Bilddaten die der Beleuchtungsfunktion sind, deren assoziierte Kritikalitätsstufe (NvCr) größer ist.

5. Verfahren nach einem der vorhergehenden Ansprüche, wobei die erste Beleuchtungsfunktion eine Lichtfunktion vom Typ adaptives Fernlicht (ADB) ist.

6. Verfahren nach einem der vorhergehenden Ansprüche, wobei die zweite Beleuchtungsfunktion eine Lichtfunktion vom Typ Straßenbeschriftung (RW) ist.

7. Verfahren nach einem der vorhergehenden Ansprüche, wobei vor dem Empfangen der Anweisung zum Aktivieren der zweiten Beleuchtungsfunktion (RW) des Fahrzeugbeleuchtungssystems (SYS)
das Verfahren ferner folgende Schritte beinhaltet:
- Komprimieren der Bilddaten der ersten Beleuchtungsfunktion (ADB); und
- Übertragen der komprimierten Bilddaten an das mindestens eine Beleuchtungsmodul (MOD) zur Erzeugung der ersten Beleuchtungsfunktion (ADB).

8. Verfahren nach einem der vorhergehenden Ansprüche, wobei vor dem Empfangen der Anweisung zum Aktivieren der ersten Beleuchtungsfunktion (ADB) des Fahrzeugbeleuchtungssystems (SYS)
das Verfahren ferner folgende Schritte beinhaltet:
- Komprimieren von Bilddaten einer dritten Beleuchtungsfunktion (HB); und
- Übertragen der komprimierten Bilddaten an das mindestens eine Beleuchtungsmodul (MOD) zur Erzeugung der dritten Beleuchtungsfunktion (HB).

9. Verfahren nach dem vorhergehenden Anspruch, wobei die dritte Beleuchtungsfunktion eine Lichtfunktion vom Typ Fernlicht (HB) ist.

10. Fahrzeugbeleuchtungssystem (SYS), das Folgendes beinhaltet:
- mindestens ein Beleuchtungsmodul (MOD), das dazu fähig ist, Beleuchtungsfunktionen anhand von komprimierten Bilddaten zu projizieren, und
- einen gemultiplexten Bus (CAN) für die Übertragung von komprimierten Bilddaten an das mindestens eine Beleuchtungsmodul (MOD) und
- ein Steuersystem (SC), das dazu konfiguriert ist, das Verfahren zur Verwaltung von Bilddaten nach einem beliebigen der vorhergehenden Ansprüche umzusetzen.

11. Fahrzeugbeleuchtungssystem (SYS) nach dem vorhergehenden Anspruch, wobei das Steuersystem (SC) Folgendes beinhaltet:
- eine erste Steuereinheit (UC1), die über eine Prozessoreinheit (PROC1) verfügt, die zu Folgendem konfiguriert ist:
• Komprimieren von Bilddaten von Beleuchtungsfunktionen,
• Übertragen der komprimierten Bilddaten über den gemultiplexten Bus (CAN) an das mindestens eine Beleuchtungsmodul (MOD),
- eine zweite Steuereinheit (UC2), die über eine Prozessoreinheit (PROC2) verfügt, die zu Folgendem konfiguriert ist:
• Empfangen von komprimierten Bilddaten, die über den gemultiplexten Bus (CAN) übertragen werden,
• Dekomprimieren der empfangenen Bilddaten,
• Erzeugen mindestens einer Beleuchtungsfunktion (HB, ADB, RW) anhand der empfangenen und dekomprimierten Bilddaten.

12. Fahrzeugbeleuchtungssystem (SYS) nach einem der Ansprüche 10 oder 11, wobei das mindestens eine Beleuchtungsmodul (MOD) mindestens eine Halbleiterlichtquelle (PLED), wie etwa LEDs, und insbesondere eine Pixel-LED-Quelle beinhaltet.

## Claims

1. Method for managing image data in a vehicle lighting system (SYS), the lighting system comprising:
- at least one lighting module (MOD) able to project lighting functions on the basis of compressed image data, and
- a multiplexed CAN-protocol or CAN-FD-protocol bus (CAN) for transmitting compressed image data to said at least one lighting module (MOD),
the method comprising the following steps:
- receiving an instruction to trigger a first lighting function (ADB) from the vehicle lighting system (SYS); **characterized in that** the method comprises the following steps:
- receiving an instruction to trigger a second lighting function (RW) from the vehicle lighting system (SYS), in order to generate the second lighting function (RW) at the same time as the first lighting function (ADB);
- determining, in order to generate said first lighting function (ADB) and second lighting function (RW) at the same time, a compression rate (TxCompReq) required to transmit the image data on said multiplexed bus (CAN);
- comparing the determined compression rate (TxCompReq) with a predetermined compression rate value (Tx0);
wherein, when the determined compression rate (TxCompReq) is greater than or equal to said predetermined value (Tx0), the method comprises the following steps:
- compressing the image data of the first function (ADB) and second function (RW);
- transmitting the compressed image data to said at least one lighting module (MOD) in order to generate the first lighting function (ADB) and second lighting function (RW) at the same time;
and wherein, when the determined compression rate (TxCompReq) is less than said predetermined value (Tx0), the method comprises the following steps:
- compressing the image data of just one of the first lighting function (ADB) and second lighting function (RW) ;
- transmitting the compressed image data to said at least one lighting module (MOD) in order to generate just one of the first lighting function (ADB) and second lighting function (RW).

2. Method according to the preceding claim, furthermore comprising steps of:
- determining an error level (NvEr) on the basis of said determined compression rate (TxCompReq),
- comparing the error level (NvEr) with a predetermined error margin value (MgEr);
and wherein the steps of compressing and transmitting the image data in order to generate the first lighting function (ADB) and second lighting function (RW) at the same time are carried out when the determined error level (NvEr) is furthermore less than or equal to the predetermined error margin value (MgEr).

3. Method according to the preceding claim, wherein the steps of compressing and transmitting the image data in order to generate just one of the first lighting function (ADB) and second lighting function (RW) are furthermore carried out when the determined error level (NvEr) is greater than the predetermined error margin value (MgEr).

4. Method according to one of the preceding claims, wherein the first lighting function (ADB) and the second lighting function (RW) are each associated with a different criticality level (NvCr),
and wherein, in said steps of compressing and transmitting the image data in order to generate just one of the first lighting function (ADB) and second lighting function (RW), the compressed and transmitted image data are those of the lighting function having the greater associated criticality level (NvCr).

5. Method according to one of the preceding claims, wherein the first lighting function is an adaptive driving beam lighting function (ADB).

6. Method according to one of the preceding claims, wherein the second lighting function is a road writing lighting function (RW).

7. Method according to one of the preceding claims, wherein, prior to the receipt of the instruction to trigger the second lighting function (RW) from the vehicle lighting system (SYS),
the method furthermore comprises steps of:
- compressing the image data of the first lighting function (ADB); and
- transmitting the compressed image data to said at least one lighting module (MOD) in order to generate the first lighting function (ADB).

8. Method according to one of the preceding claims, wherein, prior to the receipt of the instruction to trigger the first lighting function (ADB) from the vehicle lighting system (SYS),
the method furthermore comprises steps of:
- compressing image data of a third lighting function (HB); and
- transmitting the compressed image data to said at least one lighting module (MOD) in order to generate the third lighting function (HB).

9. Method according to the preceding claim, wherein the third lighting function is a high-beam lighting function (HB) .

10. Vehicle lighting system (SYS) comprising:
- at least one lighting module (MOD) able to project lighting functions on the basis of compressed image data, and
- a multiplexed bus (CAN) for transmitting compressed image data to said at least one lighting module (MOD), and
- a control system (SC) configured to implement the method for managing image data according to any one of the preceding claims.

11. Vehicle lighting system (SYS) according to the preceding claim, wherein the control system (SC) comprises:
- a first control unit (UC1) equipped with a processor unit (PROC1) configured to:
• compress image data of lighting functions,
• transmit the compressed image data to said at least one lighting module (MOD) via said multiplexed bus (CAN),
- a second control unit (UC2) equipped with a processor unit (PROC2) configured to:
• receive compressed image data transmitted via said multiplexed bus (CAN),
• decompress the received image data,
• generate at least one lighting function (HB, ADB, RW) on the basis of the received and decompressed image data.

12. Vehicle lighting system (SYS) according to either of Claims 10 and 11, wherein the at least one lighting module (MOD) comprises at least one semiconductor light source (PLED), such as LEDs, and in particular a pixelated LED source.
